# EUROPÄISCHE PATENTSCHRIFT

(11) **EP 0 938 694 B1**
(45) Veröffentlichungstag und Bekanntmachung des Hinweises auf die Patenterteilung: **25.09.2002**
(21) Anmeldenummer: 97949916.7
(22) Anmeldetag: 13.11.1997
(51) Int. Cl.: G03B 21/62, G02B 5/136, G02B 26/08, F21V 8/00, H04N 9/31

(54) **FLACHBILDSCHIRM**
FLAT DISPLAY SCREEN
ECRAN PLAT

(30) Priorität: 13.11.1996 DE 19646943
(43) Veröffentlichungstag der Anmeldung: 01.09.1999
(73) Patentinhaber: Hördum, Martin, D-50678 Köln (DE)
(72) Erfinder: Hördum, Martin, D-50678 Köln (DE)
(74) Vertreter: Bauer, Wulf, Dr.
(86) Internationale Anmeldenummer: DE9702657
(87) Internationale Veröffentlichungsnummer: WO98021622

(56) Entgegenhaltungen:
- EP-A- 0 676 902
- US-A- 4 003 080
- US-A- 5 237 641

## Beschreibung

Die vorliegende Erfindung betrifft einen Flachbildschirm zur Projektion eines Farbbildes, wie etwa eines Fernseh- oder Monitorbildes, das in den Flachbildschirm eingekoppelt wird.

Als Anzeigesysteme ohne Bildröhre sind Flachbildschirme auf Dual Scan Technologie Basis (DSTN), wie auch TFT-Displays bekannt, die häufig als Bildschirm für sogenannte Notebooks bzw. Laptop-Computer Verwendung finden. Diese Technologien sind aufgrund der dort verwendeten halb lichtdurchlässigen, elektrisch anzusteuernden Anzeigeschicht recht teuer, da ihre Qualität in der Produktion nur schwierig zu garantieren ist, und so ein arbeitsintensives Qualitätskontrollsystem bedingt das oftmals mit einer hohen Ausschußquote arbeitet.

Desweiteren sind Mikroreflektoren unter der Bezeichnung DMD (Marke der Texas Instruments Inc., Texas) bekannt, die in der Lage sind auf der Ebene einzelner Bildpunkte Lichtstrahlen zu reflektieren.

Darüber hinaus ist es heute möglich, optische Feinstrukturen zu erzeugen, mit denen eine Vielzahl optischer Beugungseffekte zu erzielen sind. Diese Technologie ist im Handel etwa von der Fresnel Optics GmbH, Apolda erhältlich.

Der Erfindung liegt daher die Aufgabe zugrunde einen Flachbildschirm anzugeben, der die Fertigungsnachteile der o.a. Technologien vermeidet.

Die Erfindung ist in Anspruch 1 definiert.

Die Aufgabe wird erfindungsgemäß durch eine Flachbildschirm-Projektionsvorrichtung von Zeilen und Reihen von Pixeln gelöst, die erfindungsgemäß dadurch gekennzeichnet ist, daß hinter cinem Bildschirm, parallel zu diesem, in die Flachbildschirm-Projektionsvorrichtung Lichtstrahlen eintreten, dann zunächst auf Reihenspiegel auftreffen, von diesen in eine Reflexionsvorrichtung gelenkt werden. die die Lichtstrahlen um eine bestimmte Länge in Richtung des Bildschirmes versetzt und diese dann reihenparallel zum Bildschirm hin zu weiteren Zeilenspiegeln umlenkt, von denen die Lichtstrahlen dann von hinten senkrecht auf den Bildschirm treffend umgelenkt werden.

Dabei liegen die Reihenspiegel vorzugsweise so, daß die von ihnen reflektierten Lichtstrahlen senkrecht in die Reflexionsvorrichtung eintreten und somit auch wieder senkrecht von diesen in Richtung der Zeilenspiegel reflektiert werden.

Es sind jedoch auch Anordnungen denkbar, wo die Reihenspiegel den Lichtstrahl in einem bestimmten Winkel zur Reflexionsvorrichtung hin reflektieren. In derartigen Fällen muß die Reflexionsvorrichtung so ausgeführt sein, (etwa durch eine den Reihen entsprechende abschnittsweise Neigung), daß der in Richtung der Zeilenspiegel wieder austretende Lichtstrahl dann wieder reihenparallel zum Bildschirm verläuft. Auch kann die notwendige Korrektur durch mikrotstrukturierte optische Oberflächen, wie etwa die eingangs erwähnte Technologie der Fresnel Optics GmbH erzielt werden.

Dabei kann die Reflexionsvorrichtung als Prismenanordnung, vorzugsweise als Anordnung von Dachkantenprismen ausgeführt sein. Auch kann die Reflexionsvorrichtung als Dachkantenspiegel ausgebildet werden, wobei vorzugsweise ein Oberflächenspiegel Verwendung findet, der zudem möglichst unabhängig gegenüber Temperaturschwankungen ist, was auch für alle anderen Spiegel gilt. die in der vorliegenden Erfindung Verwendung finden.

Eine bevorzugte Ausführungsform der vorliegenden Erfindung ist dadurch gekennzeichnet, daß die Lichtstrahlen auf ihrer letzten Bahn von den Zeilenspiegeln auf den Bildschirm durch Streulinsen, vorzugsweise Fresnellinsen hindurchgelenkt werden, bevor sie auf den Bildschirm von hinten auftreffen.

Vorzugsweise werden die Lichtstrahlen dabei zunächst jeweils durch eine gröbere Fresnellinse zur Grobstreuung und dann zur Feinstreuung durch feinere Frensellinsen gelenkt, bevor sie auf den Bildschirm von hinten auftreffen.

Eine weitere Ausführungsform nach der vorliegenden Erfindung zeichnet sich dadurch aus, daß Vorrichtungen der zuvor beschriebenen Art vermittels einer vertikalen und/oder horizontalen Aneinanderreihung einzelner Flachbildschirm-Projektionsvorrichtungen zu Flachbildschirm-Projektionsvorrichtungen größerer Bauart nach Art einer Video-Wand kombiniert werden, auf denen dann entweder jeweils gleiche Bilder gezeigt werden können, oder die optisch zugeleitete Teilbilder eines größeren Gesamtbildes darstellen. Die Zuleitung von Bildinformationen zu den einzelnen Flachbildschirm-Projektionsvorrichtungen erfolgt dabei vorzugsweise über Lichtleiter, was eine nahezu unbeschränkte Anordnungsvielfalt der Einzelkomponenten und eine beinahe ebenso unbegrenzte Größe der Gesarntvorrichtung ergibt.

In einer besonders bevorzugten Ausführungsform werden die Lichtstrahlen, bevor sie auf die Reibenspiegel treffen, entsprechend einem Farbbildsignal, vorzugsweise einem Videosignal in die Flachbildschirm-Projektionsvorrichtung eingekoppelt.

Diese Einkopplung der einzelnen farbigen Lichtstrahlen geschieht vorzugsweise mittels Mikrohubspiegeln, die von einer elektronischen Steuerung entsprechend dem Farbbildsignal angesteuert werden, wobei die Mikrohubspiegel mit verschiedenfarbigen Lichtstrahlen für ihre verschiedenen Hubpositionen versorgt werden, und je nach Hubposition einen andersfarbigen Lichtstrahl reflektieren und diesen damit in die Flachbildschirm-Projektionsvorrichtung einkoppeln.

Die verschiedenfarbigen Lichtstrahlen können etwa derart erzeugt werden, daß weißes Licht zunächst in einer Linse gebündelt und dann auf ein Prisma gelenkt wird, wo es in seine farbigen Anteile zerlegt weiter in Richtung der Hubspiegel strahlt, und zwar so, daß die Reflexionsebene für einen bestimmten Farbanteilsstrahl einer bestimmten Position des zugehörigen Hubspiegels entspricht. Somit kann je nach Position, in die der Hubspiegel aufgrund seiner Ansteuerung gerade bewegt wird ein anderer Farbanteilsstrahl weiter in Richtung der Flachbildschirm-Projektionsvorrichtung reflektiert und dann in diese eingekoppelt werden.

In einer weiteren besonders bevorzugten Ausführungsform der vorliegenden Erfindung sind die Mikrohubspiegel in Flachbauweise ausgeführt, und zwar derart, daß elektrische Spulen um den jeweiligen Spiegel auf einem Flachbauträger herum angelegt sind, so daß sich der auf dem Flachbauträger angeordnete Spiegel bei Erregung unterschiedlicher Spulen unterschiedlich wölbt, so daß er seine Reflexionsebene entsprechend der Erregung der Spulen verändert.

Ein weitere Möglichkeit, die Lichtstrahlen in die Flachbildschirm-Projektionsvorrichtung einzukoppeln besteht darin, statt eines Hubspiegels sogenannte DMD-(Marke der Texas Instruments Inc., Texas) Elemente zu verwenden, die gleichfalls als eine Art Mikrospiegel fungieren.

Eine weitere Ausführungsform zeichnet sich dadurch aus, daß solche Vorrichtungen nach der vorliegenden Erfindung, die jeweils bereits eine Einkopplungsvorrichtung für Lichtstrahlen nach der zuvor beschriebenen Art aufweisen, mittels ihrer vertikalen und/oder horizontalen Aneinanderreihung zu Flachbildschirm-Projektionsvorrichtungen größerer Bauart nach Art einer Video-Wand kombiniert werden, auf denen dann jeweils unterschiedliche Bilder gezeigt werden können, oder die ihnen elektrisch zugeleitete Teilbilder eines größeren Gesamtbildes darstellen oder auch aus der ihnen übermittelten Gesamtbildinformation nur einen bestimmten, gerade relevanten Teil darstellen.

Ein Vorteil der vorliegenden Erfindung besteht darin, daß sie tageslichttauglich ist, desweiteren kann sie rahmenlos, flach und leicht aufgebaut werden.

Ein weiterer Vorteil besteht in ihrem geringen Stromverbrauch und der geringen Anzahl von Bauteilen. Darüber hinaus sind alle Farben in nur einem Pixel darstellbar, das Licht strahlt über die ganze Pixelfläche, die Pixel sind durch keine Kante begrenzt.

Auch kann das System kompatibel zu allen Video- und Fernsehsignalsystemen vermittels einer entsprechenden Elektronik verwendet werden: insbesondere können Flachlautsprecher extern zusätzlich angebracht werden.

Ein weiterer wesentlicher Vorteil der Erfindung besteht in ihrer überaus reichhaltigen Verwendungsmöglichkeit, namentlich für Fernseher, Personalcomputer, Laptops, Notbooks, UC-Desktops, Bildwiedergabegeräte für Warenpräsentationen, für Verkehrs- und Hinweisschilder, Leitsysteme jeglicher Art, Videokontrollschirme, Anzeigenschirme, Maschinenkontrollschirme, Monitore für Fotoapparate, Schirme für Spielgeräte, Mikroskopschirme, Bildschirme in medizinischen Apparaten. Desweiteren eignet sich die Vorrichtung in der Optik zur Strahlenbündelung, Strahlenaufweitung, zur Umordnung von Strahlen, wie zu ihrer Parallelisierung und Konzentration.

In seiner Ausführungsform als Großbildschirm ist das System als Heimkino. Kino, Videowand, Simulatorenwand, für Besprechungs-, Konferenz-, Versammlungs- und sonstige Veranstaltungsräume, auf Freilichtbühnen, in Sportstätten, zur Bandenwerbung, als Stadionanzeige, zur Gebäudewerbung, als Firmengroßlogo, zur Messepräsentation, zur Anlagenüberwachung, in Freilichtausstellungen und auch als Outdoor-Werbefläche zu verwenden.

Weiterhin kann es zur Verfahrens- und Prozeßüberwachung, wie auch zur Darstellung von Geschäftsprozessen oder auch Abläufen wie etwa in Fabriken, Verwaltungen, Börsen dienen.

Es kann der Kommunikation insbesondere bei der Präsentation, Training und im Unterricht nützen.

Die vorliegende Erfindung ist ferner für Leitzentralen, insbesondere in Fernsehanstalten, der Raumfahrt, der chemischen Industrie, der Metallinduistrie, auf Flughäfen, in Häfen der Schiffahrt, auf Bahnhöfen, von Autobahnen, von solchen des öffentlichen Personen- und Güternah- und Fernverkehrs geeignet.

Es bietet sich ihre Verwendung in sogenannten Themenparks, auf Expo's, Gartenschauen, in Theater, Musical und Show an.

Auch eignet sich die Erfindung zur Montage an Schaufenstern, Fenstern, Brüstungen, Türen, Innen- und Außenwänden, an Decken und Böden.

Im Kraftfahrzeug kann sie als Armaturenanzeige, als Anzeige in der Windschutzscheibe, als Mautplaketten- und als Unfallwamanzeige, wie auch als Anzeige zur Nachfolgerinformation verwendet werden.

Desweiteren eignet sie sich für Taschenrechner, Minianzeigen, Tischplatten, Bildkonferenzanzeigen, Rednerpultanzeigen, Zeichenbretter. Dekoflächen, Schultafeln, Schultische und Lichtcomputer, sowie vorzugsweise für Diskotheken.

Im folgenden werden nicht einschränkend zu verstehende Ausführungsbeispiele anhand der Zeichnung besprochen. In dieser zeigen:
- Fig. 1: eine Flachbildschirm-Projektionsvorrichtung nach der vorliegenden Erfindung in einer perspektivischen Darstellung von schräg hinten,

- Fig. 2: einen Teil der Flachbildschirm-Projektionsvorrichtung nach Fig. 1 im Längsschnitt im Bereich des Prismas.
- Fig. 3: eine Flachbildschirm-Großprojektionsvorrichtung nach der vorliegenden Erfindung mit einer zentralen Bildeinkopplungseinrichtung in Frontansicht,
- Fig. 4: die Flachbildschirm-Großprojektionsvorrichtung nach Fig. 3 in Seitenansicht,
- Fig. 5: die Flachbildschirm-Großprojektionsvorrichtung nach Fig. 3 in Aufsicht von oben,
- Fig. 6: eine Einkopplungseinrichtung zur Bildeinkopplung in eine Flachbildschirm-Projektionsvorrichtung nach der vorliegenden Erfindung in schematischer Darstellung,
- Fig. 7: eine Anordnung mehrerer Mikrohubspiegel für eine Einkopplungseinrichtung zur Bildeinkopplung in eine Flachbildschirm-Projektionsvorrichtung nach der vorliegenden Erfindung in Seitenansicht,
- Fig. 8: die Anordnung mehrerer Mikrohubspiegel nach Fig. 7 für eine Einkopplungseinrichtung zur Bildeinkopplung in die Flachbildschirm-Projektionsvorrichtung nach der vorliegenden Erfindung in Seitenansicht im Detail,
- Fig. 9: eine weitere Anordnung mehrerer Mikrohubspiegel in Flachbauweise für eine Einkopplungseinrichtung zur Bildeinkopplung in die Flachbildschirm-Projektionsvorrichtung nach der vorliegenden Erfindung in Aufsicht,
- Fig. 10: eine weitere Flachbildschirm-Großprojektionsvorrichtung nach der vorliegenden Erfindung mit je einer eigenen Bildeinkopplungseinrichtung für die verwendeten Flachbildschirm-Projektionsvorrichtung in Rückansicht,
- Fig. 11: ein Beispiel einer Flachbildschirm-Großprojektionsvorrichtung alternativ zu der vorliegenden Erfindung in der Lichtwellenleiter zur Bildinformationszuleitung verwendet werden,
- Fig. 12: ein Beispiel einer Flachbildschirm-Projektionsvorrichtung alternativ zu der Erfindung, gezeigt in perspektivischer Darstellung mit Blickrichtung von hinten, schräg oben,
- Fig. 13: eine Vorderansicht in perspektivischer Darstellung der Anordnung gemäß Fig. 11, jedoch mit entferntem Flachbildschirm und Einkoppelprisma,
- Fig. 14: eine Darstellung ähnlich Fig. 13, jedoch in nicht perspektivischer Vorderansicht und mit eingezeichnetem Strahlengang sowie Umlenkprisma,
- Fig. 15: eine Seitenansicht mit Blick auf die linke Seite der Anordnung gemäß Fig. 14,
- Fig. 16: eine Seitenansicht entsprechend Fig. 15, jedoch mit Blick auf die rechte Seite,
- Fig. 17: eine Darstellung der Anordnung gemäß Fig. 12 mit Blick von oben,
- Fig. 18: eine Darstellung entsprechend Fig. 17, jedoch mit Blick von unten,
- Fig. 19: eine Darstellung ähnlich Fig. 14, jedoch nunmehr mit einem Fresnelspiegelmikrorillen in Rückansicht,
- Fig. 20: eine Darstellung der Anordnung gemäß Fig. 19 in Seitenansicht mit Blick auf die linke Seite,
- Fig. 21: eine Draufsicht auf die Anordnung gemäß Fig. 19,
- Fig. 22: eine Darstellung des Lichtstrahlengangs des Ausführungsbeispiels nach Fig. 19,
- Fig. 23: eine perspektivische Darstellung einer Streuscheibe,
- Fig. 24: eine perspektivische Darstellung einer Pixelscheibe,
- Fig. 25: eine perspektivische Darstellung einer Umlenkscheibe,
- Fig. 26: eine perspektivische Darstellung eines Laserprojektors mit RGB-Laser und mit einem Einlenkprisma.
- Fig. 27: eine Darstellung für die Aufweitung eines Laserstrahls in viele einzelne, parallele Laserstrahlenmittel einer Spiegelanordnung,
- Fig. 28: eine Projektionsanordnung mit Spiegelmikrorillenschirm und mit gleichlangem Strahlengang, Scharfeinstellung des Bildes auf der Streuscheibe, Ansicht von der Rückseite,
- Fig. 29: eine Seitenansicht eines Spaltenumlenkkörpers mit Spiegelflächen, wie er in der Ausführung gemäß Fig. 28 Einsatz findet,
- Fig. 30: eine Untersicht auf die Anordnung gemäß Fig. 28,
- Fig. 31: eine Draufsicht auf einen Zeilenumlenkkörper,
- Fig. 32: eine Seitenansicht einer Pixelscheibe mit Streuscheibe, wobei alle Umlenkkörper miteinander verbunden sind.
- Fig. 33: eine Seitenansicht eines Lichtlenkkörpers mit unterschiedlichen Spiegelmikrorillenformen, einseitig,
- Fig. 34: eine Darstellung eines Lichtlenkkörpers, zweiseitig, mit Spiegelmikrorillen,
- Fig. 35: eine Darstellung in Seitenansicht eines Lichtlenkkörpers, der gebogen ist,
- Fig. 36: eine Vorderansicht eines Projektors mit Spiegelmikrorillenschirm und für dreidimensionale Darstellung.
- Fig. 37: eine Seitenansicht auf die linke Seite der Anordnung gemäß Fig. 36,
- Fig. 38: eine perspektivische Darstellung einer Streuscheibe mit Pixelanordnung verschiedener Pixel für die beiden Augen eines Betrachters
- Fig. 39: eine Ansicht einer Projektionsvorrichtung für dreidimensionale Projektion, die Betrachtung erfolgt von der Rückseite,
- Fig. 40: die Anordnung gemäß Fig. 39 in Draufsicht,
- Fig. 41: eine Darstellung des Strahlengangs bei dreidimensionaler Darstellung und waagerechter Schnittebene,
- Fig. 42: eine Darstellung entsprechend Fig. 41, jedoch bei senkrechter Schnittebene,
- Fig. 43: ein Funktionsschema zur Erläuterung der dreidimensionalen Darstellung, gezeigt sind zwei Augen eines Betrachters,
- Fig. 44: eine perspektivische Darstellung einer 3D-Linse mit Prismateil für die dreidimensionale Darstellung gemäß des Schemas nach Fig. 43,
- Fig. 45: eine perspektivische Darstellung einer Mikrorillen-Sammellinsen-Scheibe für Parallelstrahlenprojektoren zur Erzeugung von gleichlangen Brennweiten bei ungleicher Strahlenlänge,
- Fig. 46: eine perspektivische Darstellung eines Linsenschirms für dreidimensionale Linsen ähnlich Fig. 44,
- Fig. 47: ein Funktionsschema für die Spiegelmikrorillenanordnung für einen Schirm mit dreidimensionaler Darstellung, Blick auf die Oberseite,
- Fig. 48: eine Darstellung entsprechend Fig. 47, jedoch nunmehr mit Blick auf die Vorderseite,
- Fig. 49: eine Innenansicht eines Bildschirms mit einzelnen Teilpixeln eines Bildpunktes für eine dreidimensionale Darstellung,
- Fig. 50: eine Seitenansicht einer Vorrichtung mit einem Bildschirm gemäß Fig. 49,
- Fig. 51: eine Draufsicht auf die Vorrichtung entsprechend den Figuren 49 und 50,
- Fig. 52: eine perspektivische Darstellung ähnlich Fig. 43 für die Verdeutlichung einer dreidimensionalen Darstellung, jetzt aber mit einem Linsenkörper, der auf seiner Rückseite die Streuscheibe, also ein Element des Bildschirms, hat und die auf ihrer im Strahlengang vom liegenden Seite sowohl Linsenfunktion als auch die Funktion eines Prismas ausübt,
- Fig. 53: eine perspektivische Darstellung eines Linsenkörpers entsprechend Fig. 52,
- Fig. 54: eine Seitenansicht einer Vorrichtung ähnlich derjenigen nach den Fig. 49 bis 51, jedoch nunmehr mit einem Ablenkspiegel weniger, dargestellt ist ein Projektor und sein Strahlengang bis zu einem Bildschirm,
- Fig. 55: eine Vorderansicht der Vorrichtung gemäß Fig. 54,
- Fig. 56: eine Draufsicht auf die Vorrichtung nach den Fig. 54 und 55,
- Fig. 57: eine Rückansicht einer weiteren Ausführung einer Vorrichtung ähnlich dem vorausgegangenen Beispiel, jedoch nunmehr mit einem Spiegel weniger, gezeigt sind der Projektor und die Rückseite der Vorrichtung,
- Fig. 58: eine Seitenansicht, teilweise schnittbildlich, der Vorrichtung gemäß Fig. 57,
- Fig. 59: ein Schnittbild durch eine Projektionsvorrichtung mit einem Rundschirm und
- Fig. 60: eine Draufsicht auf die Vorrichtung gemäß Fig. 59.

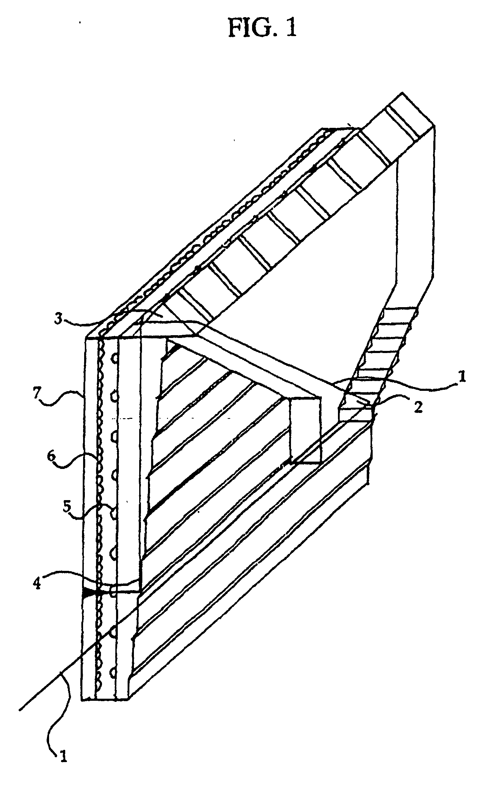

Fig. 1 zeigt eine eine Flachbildschirm-Projektionsvorrichtung nach der vorliegenden Erfindung in einer persperspektivischen Darstellung von schräg hinten. Beispielhaft ist der Weg eines Lichtstrahls **1** gezeichnet, der in die Flachbildschirm-Projektionsvorrichtung eintritt, dann zunächst auf einen Reihenspiegel **2** auftrifft, von diesem in eine Reflexionsvorrichtung, hier ein Prisma **3** gelenkt wird, welches den Strahl **1** um eine bestimmte Länge in Richtung des Bildschirmes versetzt und ihn dann reihenparallel zum Bildschirm hin zu einem weiteren Zeilenspiegel **4** umlenkt, von dem der Strahl **1** dann von hinten senkrecht über eine Grobstreulinse **5** und eine Feinstreulinse **6** auf den Bildschirm **7** umgelenkt wird.

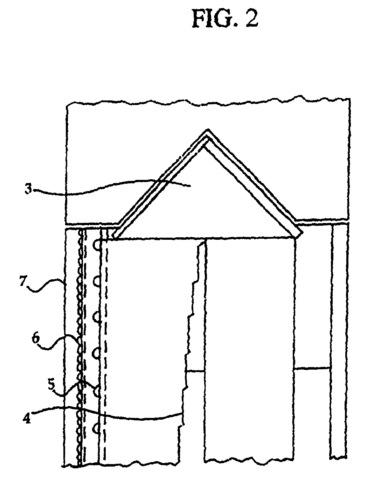

Fig. 2 zeigt einen Teil der Flachbildschirm-Projektionsvorrichtung nach Fig. 1 im Längsschnitt im Bereich des Prismas. Das Prisma **3**, ein Teil der Zeilenspiegel **4,** sowie Grob- **5,** Feinstreulinsen **6** und ein Teil des Bildschirms **7** sind hier etwas detaillierter zu sehen.

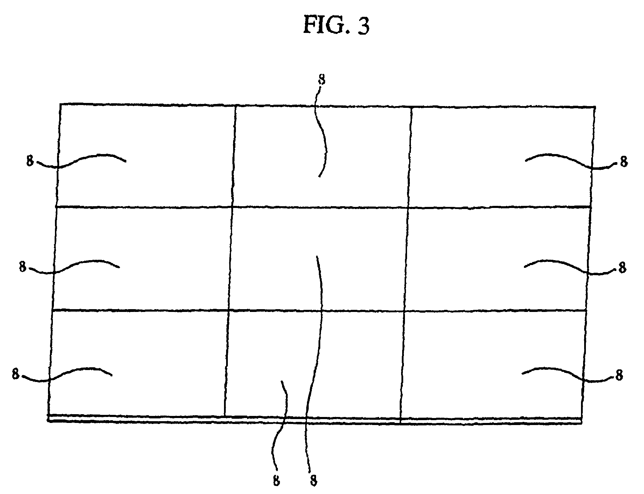

Fig. 3 zeigt eine Flachbildschirm-Großprojeklionsvorrichtung nach der vorliegenden Erfindung mit einer zentralen Bildeinkopplungseinrichtung in Frontansicht. Die Großprojektionsvorrichtung besteht hier aus neun einzelnen Flachbildschirm-Projektionsvorrichtungen **8** die jedoch nur eine einzige zentrale Bildeinkopplungseinrichtung an der Rückfront, die hier nicht zu sehen ist, aufweisen.

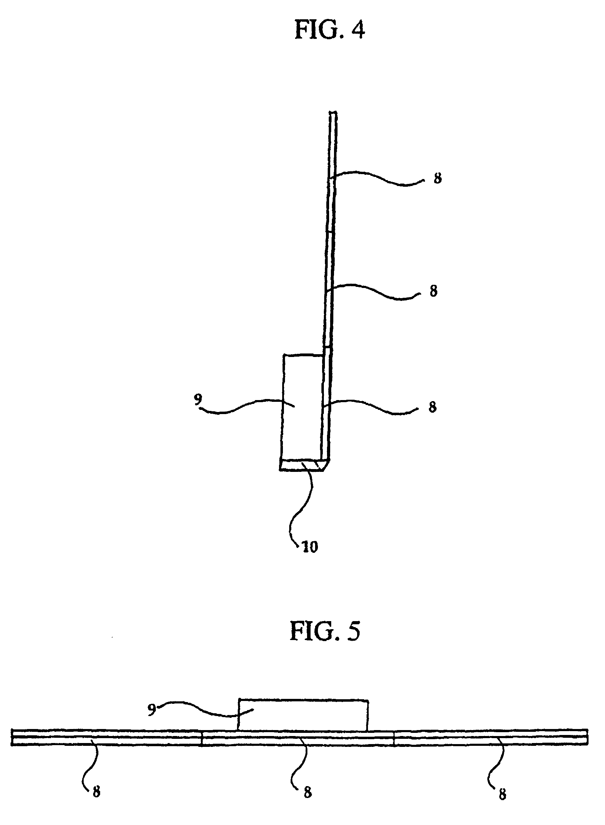

Fig. 4 zeigt eine Flachbildschirm-Großprojektionsvorrichtung nach Fig. 3 in Seitenansicht. Hier ist neben den einzelnen Flachbildschirm-Projektionsvorrichtungen **8** die rückseitige zentrale Bildeinkopplungseinrichtung **9**, wie auch der Fuß **10** der Vorrichtung zu sehen.

Fig. 5 zeigt eine Flachbildschirm- Großprojektionsvorrichtung nach Fig. 3 in Aufsicht. Hier ist neben den einzelnen Flachbildschirm-Projektionsvorrichtungen **8** die rückseitige zentrale Bildeinkopplungseinrichtung **9** von oben zu sehen.

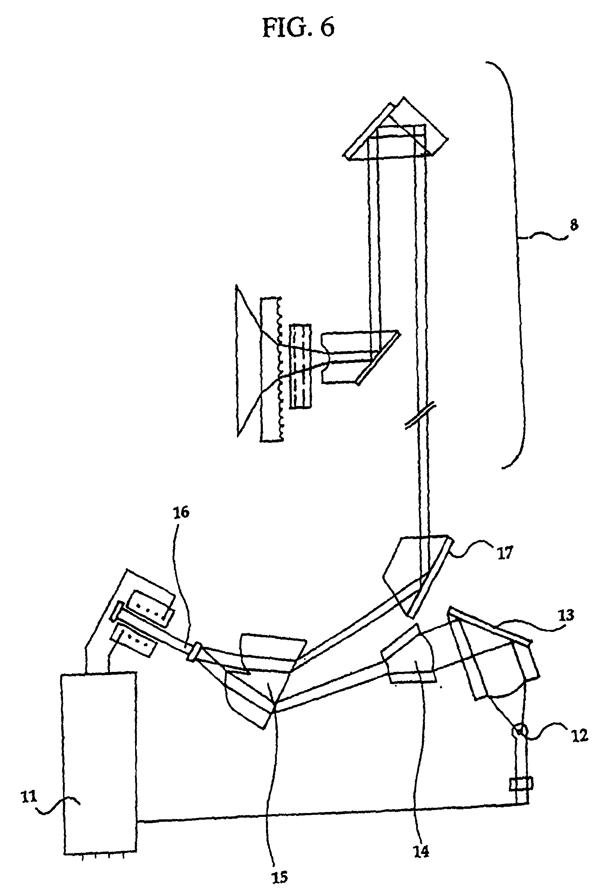

Fig. 6 zeigt eine Einkopplungseinrichtung zur Bildeinkopplung in eine Flachbildschirm-Projektionsvorrichtung **8** nach der vorliegenden Erfindung in schematischer Darstellung. Hier werden die Lichtstrahlen, bevor sie auf die Reihenspiegel der Flachbildschirm-Projektionsvorrichtungen **8** treffen, entsprechend einem Farbbildsignal, vorzugsweise einem Videosignal in die Flachbildschirm-Projektionsvorrichtung **8** eingekoppelt. Diese Einkopplung geschieht mittels einer elektronischen Steuerung **11** entsprechend dem Farbbildsignal.

Von einer Lampe **12** ausgehendes weißes Licht wird von einem ersten Spiegel **13** reflektiert, dann in einer Linse **14** gebündelt und in ein Prisma **15** gelenkt, wo es in seine farbigen Anteile zerlegt, weiter in Richtung von Mikrohubspiegeln **16** strahlt. von denen je einer pro Pixel vorhanden ist, und zwar so, daß die Reflexionsebene für einen bestimmten Farbanteilsstrahl einer bestimmten Position des zugehörigen Hubspiegels entspricht. Somit kann je nach Position, in die der Hubspiegel **16** aufgrund seiner von der Elektronik **11** erfolgten Ansteuerung gerade bewegt wird, ein anderer Farbanteilsstrahl weiter in Richtung der Flachbildschirm-Projektionsvorrichtung **8** reflektiert und dann in diese eingekoppelt werden.

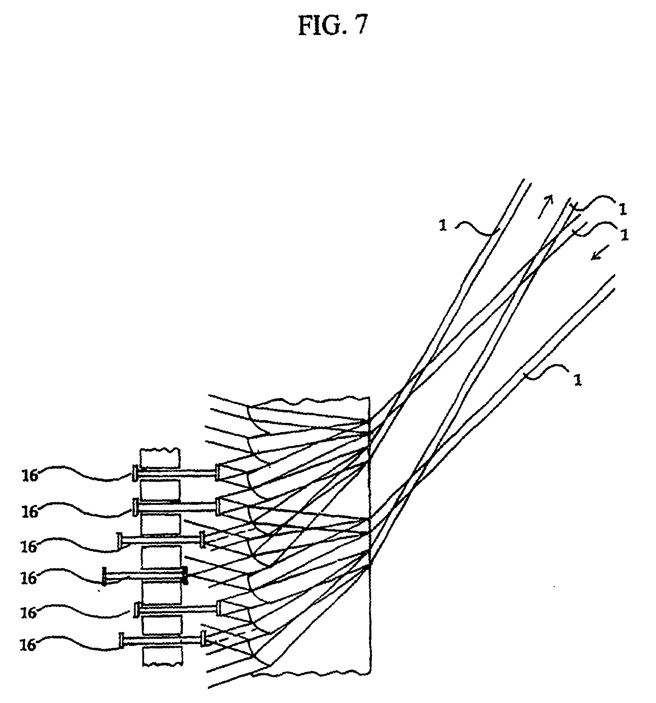

Fig. 7 zeigt eine Anordnung mehrerer Mikrohubspiegel **16** für eine Einkopplungseinrichtung zur Bildeinkopplung in eine Flachbildschirm-Projektionsvorrichtung nach der vorliegenden Erfindung in Seitenansicht, wobei hier Lichtstrahlen **1** auf die Hubspiegel **16** in verschiedener Position auftreffen.

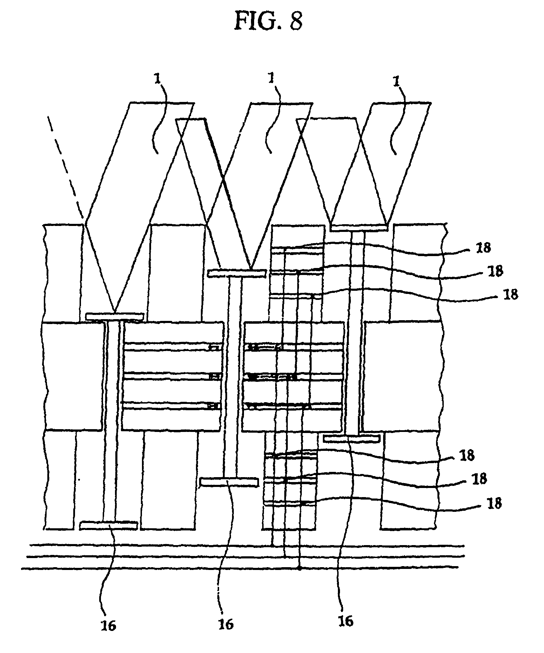

Fig. 8 zeigt die Anordnung mehrerer Mikrohubspiegel **16** nach Fig. 7 für eine Einkopplungseinrichtung zur Bildeinkopplung in die Flachbildschirm-Projektionsvorrichtung nach der vorliegenden Erfindung in Seitenansicht im Detail. Hier können die Hubspiegel vermittels kleiner Elektromagnete **18**, die wahlweise angesteuert werden können in jeweils drei verschiedene Positionen gefahren werden.

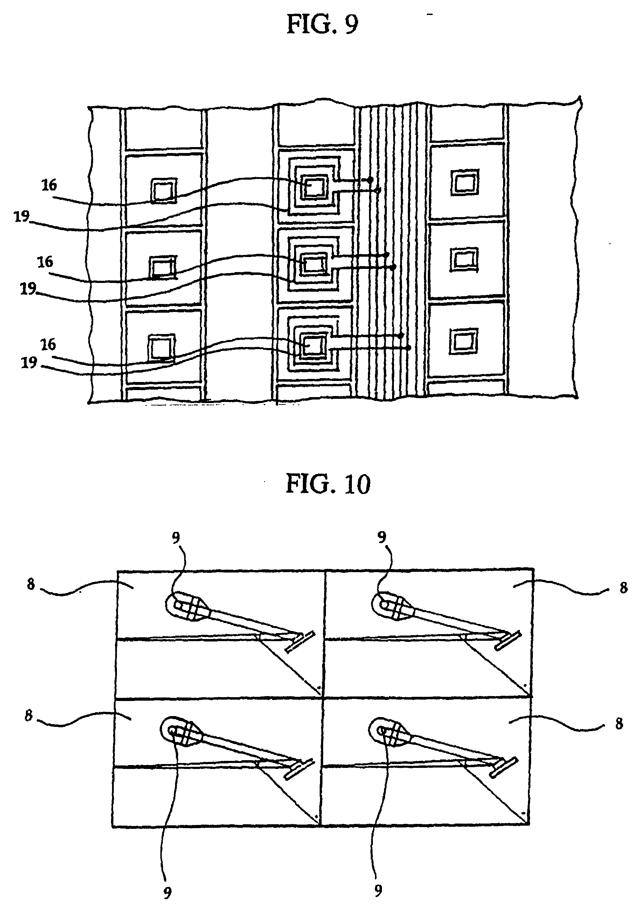

Fig. 9 zeigt eine weitere Anordnung mehrerer Mikrohubspiegel **16** in Flachbauweise für eine Einkopplungseinrichtung zur Bildeinkopplung in die Flachbildschirm-Projektionsvorrichtung nach der vorliegenden Erfindung in Aufsicht. Die Spiegel befinden sich hier auf einem flachen, dünnen und biegsamen Substrat, daß sich wölbt, sobald an eine der Spulen **19** Strom angelegt wird. Je nachdem welche oder wie viele Spulen **19** um einen Spiegel **16** herum erregt werden, desto mehr oder weniger wölbt sich das Substrat, auf dem sich der **S**piegel **16** befindet. Je nach Wölbung des Substrats ist die Position des darauf befindlichen Mikrospiegels **16** somit eine höhere oder niedrigere.

Fig. 10 zeigt eine weitere Flachbildschirm-Großprojektionsvorrichtung nach der vorliegenden Erfindung mit je einer eigenen Bildeinkopplungseinrichtung **9** für die verwendeten einzelnen Flachbildschirm-Projektionsvorrichtungen **8** in Rückansicht.

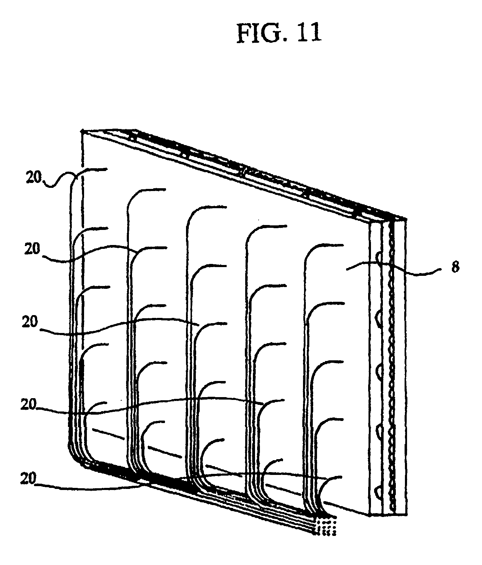

Fig. 11 zeigt eine Flachbildschirm-Großprojektionsvorrichtung alternativ zu der vorliegenden Erfindung. Die Bilder werden den einzelnen Flachbildschirm-Projektionsvorrichtungen **8** optisch zugeleitet. Die Zuleitung von Bildinformationen zu den einzelnen Flachbildschirm-Projektionsvorrichtunge **8** erfolgt dabei hier über Lichtleiter **20,** was eine nahezu unbeschränkte Anordnungsvielfalt der Einzelkomponenten und eine beinahe ebenso unbegrenzte Größe der Gesamtvorrichtung zuläßt.

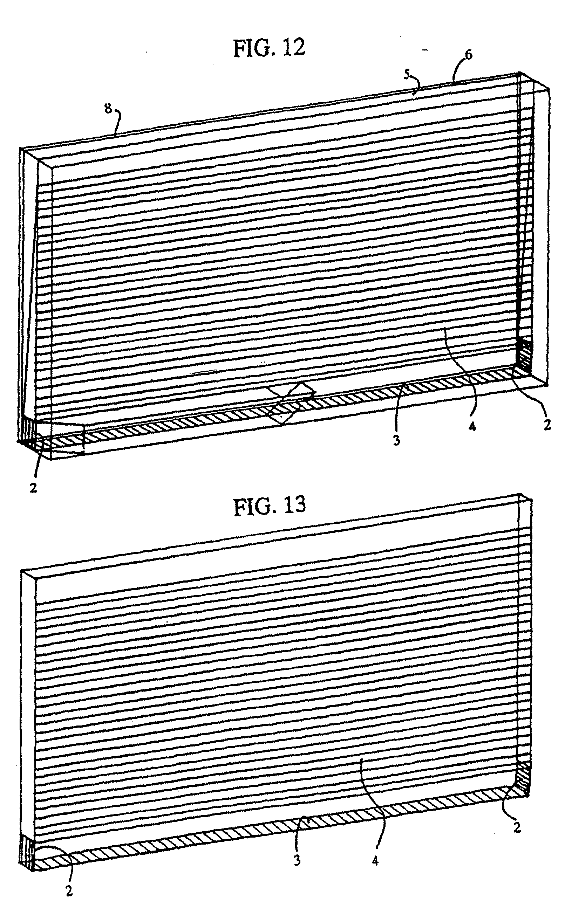

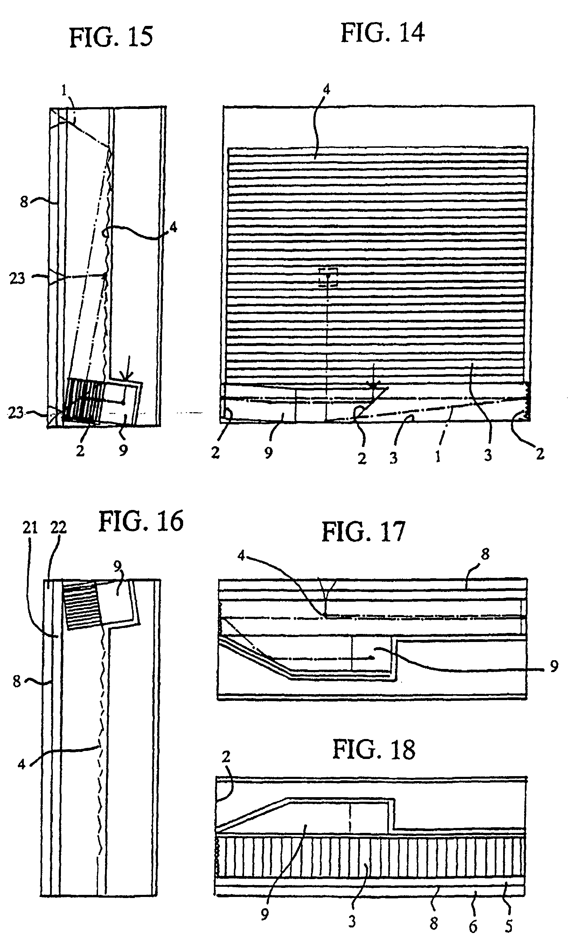

Das alternative Beispiel nach den Figuren 12 bis 18 wird nun im folgenden beschrieben. Der von einem nicht dargestellten Projektor ausgesandte Lichtstrahl **1** fällt von oben, leicht nach schräg hinten geneigt, auf einen prismatischen Körper **9**, in diesem wird er zunächst einmal total reflektiert. Dies ist insbesondere aus den Figuren 14 und 17 ersichtlich. Es fällt sodann nach einer zweiten Totalreflexion auf einen ersten Zeilenspiegel **2**, der senkrecht verlaufende Rillen hat, man ersieht dies beispielsweise aus Fig. 17. Von dort durchquert er nahezu waagerecht die gesamte Vorrichtung bis zur anderen Seite und fällt auf einen ersten Reihenspiegel **3**, der waagerecht verlaufende Rillen aufweist, man erkennt dies beispielsweise aus Fig. 14. Von letzterem Spiegel fällt er auf einen zweiten Reihenspiegel **3**, der am Boden der Vorrichtung angeordnet ist. siehe beispielsweise Fig. 18. Von dort fällt er schräg nach oben ansteigend im steilen Winkel auf die zweiten Zeilenspiegel **4**. Von diesen wird er über Fresnellinsen auf den Bildschirm **7** von hinten geführt, letzterer ist als Streuscheibe ausgebildet. Das Besondere liegt darin, daß die gesamten Spiegelrillen in einem einstückigen Körper hergestellt werden können, sie können beispielsweise durch Pressen erstellt werden, hierzu wird auf Fig. 13 verwiesen, die einen entsprechenden Körper mit vier Spiegelflächen zeigt, die in unterschiedlichen Richtungen ausgebildete Rillen ausweisen. Das einlenkende Prisma ist leicht schief eingesetzt, wie insbesondere aus den Figuren 15 und 16 deutlich wird. Dadurch erreicht man die mit steilen Winkel schräg laufenden Verläufe der Lichtstrahlen.

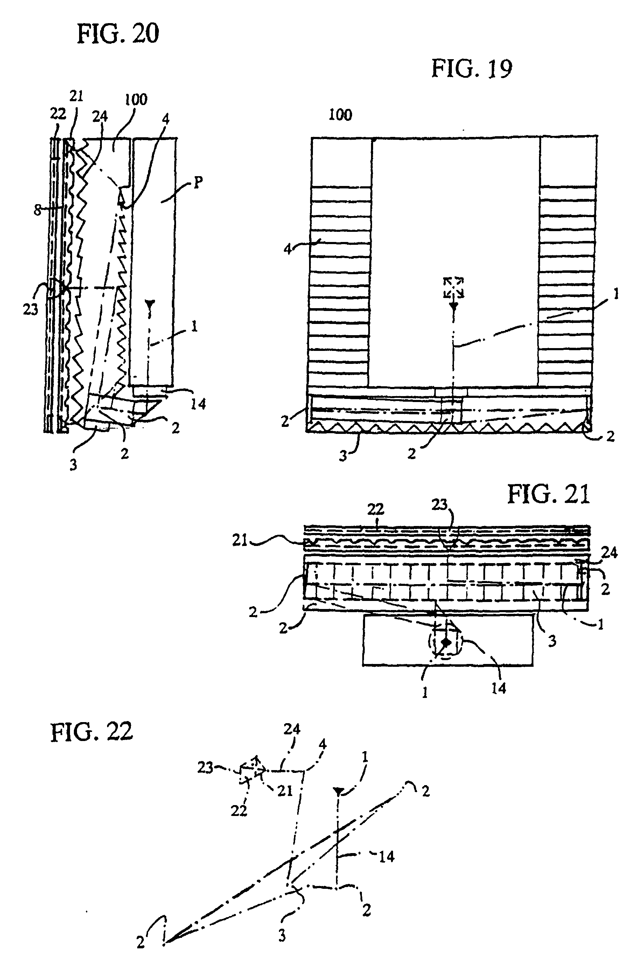

Als nächstes wird nun das alternative Beispiel nach den Figuren 19 bis 26 beschrieben: Im Unterschied zu dem zuletzt besprochenen Beispiel sind nun die beiden seitlichen, einander gegenüberstehenden Spiegel **2** nicht als Rillenspiegel, sondern als Planspiegel ausgebildet. Auch der prismatische Einlenkkörper **9** ist verändert. Die Einstrahlung über einen Projektor **P** erfolgt nun lotrecht von oben, der Lichtstrahl **1** fällt auf eine erste total reflektierende Schrägfläche **2** und gelangt von da aus im wesentlichen nach vorn, zu einem Bildschirm **8** hin. Auf diesem Wege findet eine zweite Totalreflexion bei **2** statt, die dazu führt, daß in Fig. 21 der Strahl nach links zu einem linken, schräg gestellten Seitenspiegel **2** gelangt. Von dort durchquert er wieder die gesamte Vorrichtung zum rechten, planen Seitenspiegel **2**. Von diesem aus kommt er wieder auf Reihenspiegel **3**, die auf dem Boden der Vorrichtung (siehe beispielsweise Fig. 19) vorgesehen sind. Von diesen kommt er wieder auf Zeilenspiegel und über eine Anordnung mit Fresnellinsen auf eine Streuscheibe, die hier den Bildschirm **7** bildet. Sie ist aufgeteilt in eine grobe Streuscheibe, hier Pixelscheibe **21** bezeichnet und eine feine Streuscheibe, hier Streuscheibe **22** genannt.

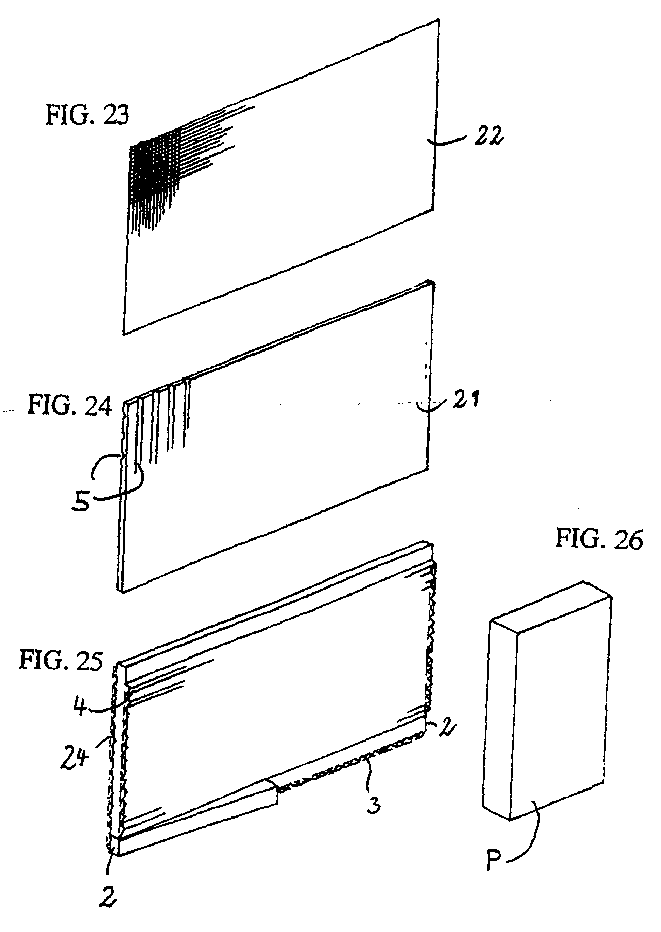

Der Verlauf des Lichtstrahlenganges ist aus Fig. 22 ersichtlich. Bei 1 wird das Licht von dem Projektor **P** eingebracht, man erkennt die zweifache Reflexion innerhalb des prismatischen Umlenkkörpers **9,** den Hergang zwischen den beiden Spiegeln und dann der weiter beschriebene Strahlengang. Aus Fig. 23 ist die Streuscheibe **22** ersichtlich. Sie hat an einer Oberfläche, vorzugsweise aber auch an beiden Oberflächen in sehr engem Rastermaß ausgeführte Rillen, die sich kreuzen. Die aus Fig. 24 ersichtliche Pixelscheibe hat auf beiden Seiten parallel zueinander verlaufende Rundrillen, die aber auf der einen Seite um 90 Grad gedreht verlaufen als auf der anderen Seite. Diese Hohlrillen wirken als Zerstreuungslinsen und weiten den Strahl zu einem größeren Pixel auf. Fig. 25 zeigt einen kompakten Lichtlenkköpcr **100.** An ihm ist das Einlenkprisma links unten vorgesehen. Weiterhin sind die seitlichen Spiegel ausgebildet. An seiner Unterfläche ist der Reihenspiegel **3** über die gesamte Länge ausgeführt. Die Rückseite, die in Fig. 25 oben ist, bildet die einzelnen Zeilenspiegel. An der Vorderfläche ist eine Fresnellinse **24** ausgebildet, die die nach oben schräg verlaufenden Lichtstrahlen in die waagerechte bringt. Fig. 26 zeigt noch den zugehörigen Projektor **9.**

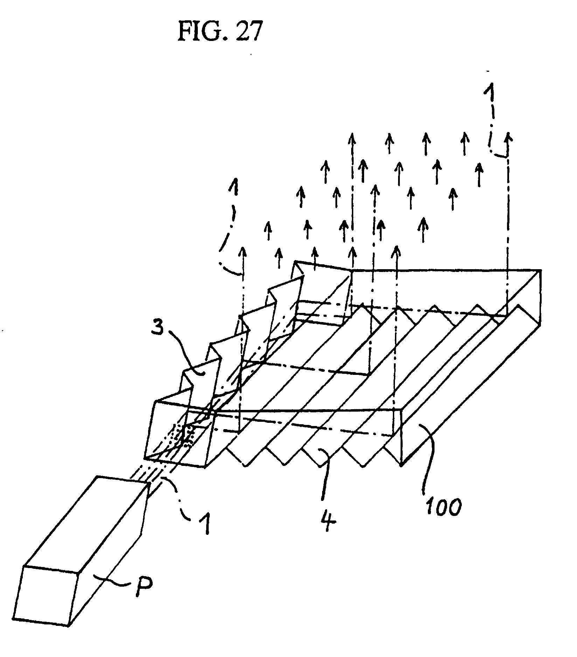

Fig. 27 zeigt einen kompakten Umlenkkörper **100,** wie er für eine Vorrichtung alternativ zu der Erfindung eingesetzt werden kann. Eingestrahlt wird das Licht mittels eines Projektors **P**, der hier als Laser ausgeführt ist. Die Strahlen fallen je nach Winkellage auf unterschiedliche Spiegel, die sägezahnförmig hintereinander und im Winkel geringfügig geneigt angeordnet sind, eines Reihenspiegels **3**. Von dort werden sie nach rechts in Fig. 27 abgelenkt, je nach ausgangsmäßiger Winkellage weiter vor oder weiter hinten. Sie treffen auf einen flächigen Zeilenspiegel **4**, der ebenfalls durch eine Sägezahnanordnung von der Zeilenzahl entsprechenden Rillen gebildet wird. Diese Rillen laufen durch, sie verlaufen im wesentlichen parallel zum Eingangsstrahl **1**. Auf diese Weise ist für jede Reihe eine der Zeilenzahl entsprechende Anzahl von einzelnen Spiegeln vorgegeben. Von diesen Zeilenspiegeln **4** gehen die einzelnen Strahlen im wesentlichen nach oben, wie dies aus Fig. 27 ersichtlich ist. Auf diese Weise hat man den Querschnitt des Eingangsstrahls **1** stark vergrößert in einer im wesentlichen flachen, eher zweidimensionalen Anordnung eines Lichtlenkkörpers **100**. Dieser kann aus einem flachen Glasstück hergestellt werden, in dem auf der Unterseite die Zeilenspiegel eingearbeitet werden und auf der linken Seite die Reihenspiegel, wie in Fig. 27 dargestellt. Wie Fig. 27 zeigt, ist der Eingangsstrahl **1** so leicht gegenüber der Ebene des Reihenspiegels **3** geneigt, daß auf jede einzelne spiegelnde Schrägfläche ein gleicher Anteil des Lichtbündels auftrifft. Gleiches gilt für die Zeilenspiegel. Diese sind ebenfalls so angeordnet, daß jeder einzelne Zeilenspiegel einen proportionalen Anteil seines Reihensignals erhält.

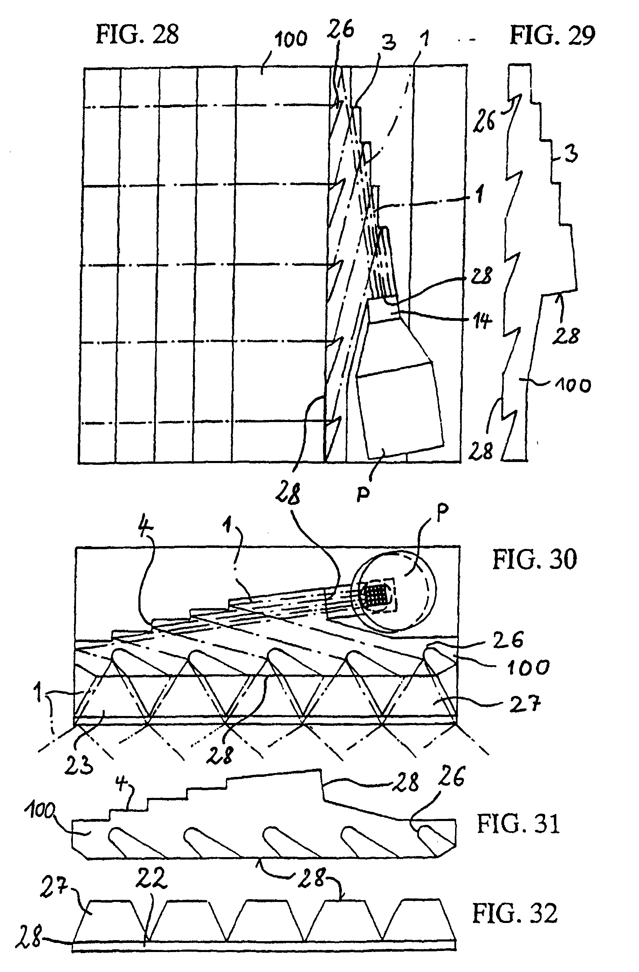

Im folgenden wird nun das alternative Beispiel nach den Figuren 28 bis 32 beschrieben. Hier liegen ähnliche Verhältnisse vor wie im Beispiel gemäß Fig. 27. Es ist jedoch nun darauf geachtet, daß die Lichtwege für jedes einzelne Pixel **23** vom Projektor **P** bis zum Bildschirm **7** gleich lang sind. Jedes einzelne Pixel **23** bedeutet, daß dies sowohl für die Reihen- als auch für die Zeilenspiegel gilt. Im Beispiel nach Fig. 27 ist dagegen der Strahl für das links unten liegende Pixel der kürzeste, hier ist der Lichtweg am kürzesten, während für das rechts oben liegende Pixel, Pfeil am rechten Bildrand, der weiteste Weg gegeben ist. Im Beispiel nach den Figuren 28 bis 32 verlaufen die einzelnen Lichtstrahlen für die jeweiligen Pixel immer Z-förmig. Sie werden zunächst von ersten Reihen- oder Zeilenspiegeln nahezu V-förmig zurückgeworfen und dann über weitere, ergänzende Zeilen- bzw. Reihenspiegel zum Flachbildschirm **8** hin geworfen. Ausgehend von einer Einkoppelfläche **28,** die hier als optische Klebstelle ausgebildet ist und an der der Projektor **P** angeordnet ist, laufen die Strahlen gegen Reihenspiegel **3**, die im wesentlichen quer zu ihrer Strahlrichtung angeordnet sind. Von dort treffen sie innerhalb desselben Glaskörpers **100** auf sägezahnförmig ausgebildete zweite Reihenspiegel **3**, die die Strahlen nach links in der Ebene der Fig. 28 lenken. Der Strahlengang findet in einem kompakten Körper **100**, also beispielsweise einem Glaskörper, statt. Fig. 31 zeigt den Lichtlenkkörper **100** für die Zeilen. Auch hier ist wiederum eine längliche Einkoppelstelle **28** ausgebildet, die eine der Breite des Bildschirms entsprechende Länge hat. Auf ihr befinden sich alle Reihensignale. Die Strahlen treten von dieser weiteren Einkoppelfläche **28** in den zweiten Leitkörper **100,** der die Aufspaltung in Zeilen vomimmt. Auch hier sind wiederum erste Zeilenspiegel. die im wesentlichen quer zur Strahlrichtung stehen und zweite Reihenspiegel, die gleiche Richtung haben und das Licht nach unten (siehe Fig. 31) werfen, vorgesehen. Von dort trifft es auf einen Bildschirm, der hier eine besondere Ausbildung hat. Er ist als Taperscheibe ausgeführt. Er hat reihenweise angeordnete Lichtleitkörper mit trapezförmigem Querschnitt, die dazwischen ausgeführten V-förmigen Rillen fallen zusammen mit den Innenräumen der Kehlspiegel, dort findet eine Lichtleitung nicht statt. Auch diese Taperscheibe ist verkittet mit dem einstückigen Zeilenleitkörper, der wiederum mit dem Reihenleitkörper verkittet ist. Lichtenergiemäßig werden dadurch besonders günstige Bedingungen erreicht.

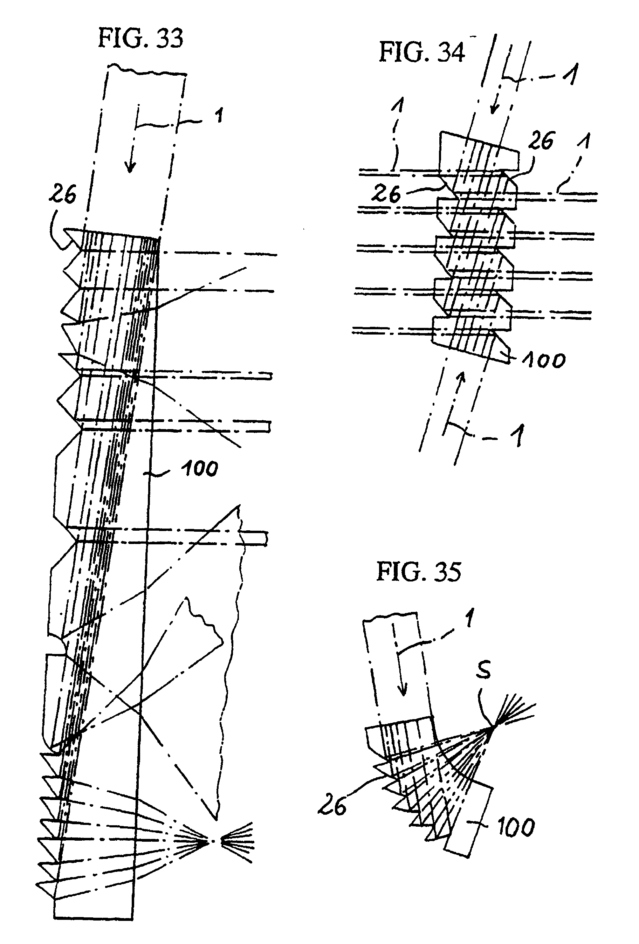

Fig. 33 zeigt einen Lichtleitkörper **100**, der unterschiedlich ausgebildete Oberflächenbereiche hat. Man kann daraus erkennen, daß verschiedene Strahlenführungen möglich sind.

Ebenso zeigt Fig. 34 einen entsprechenden Lichtleitkörper **100**, der jedoch nun von zwei Seiten aus benutzbar ist. Deswegen sind auch zwei Einkoppelflächen **28** vorgesehen, einmal für einen Lichtstrahl von unten und einmal für einen Lichtstrahl von oben. Der Lichtstrahl von unten wird nach links geworfen während der Lichtstrahl von oben nach rechts (siehe Fig. 34) austritt.

Fig. 35 schließlich zeigt eine Anordnung, bei der ein gebogener Lichtlenkkörper vorgesehen ist. Man erkennt eine Fokussierung aller Lichtstrahlen in einem Sammelpunkt **5,** von da aus divergieren die einzelnen Strahlen wieder.

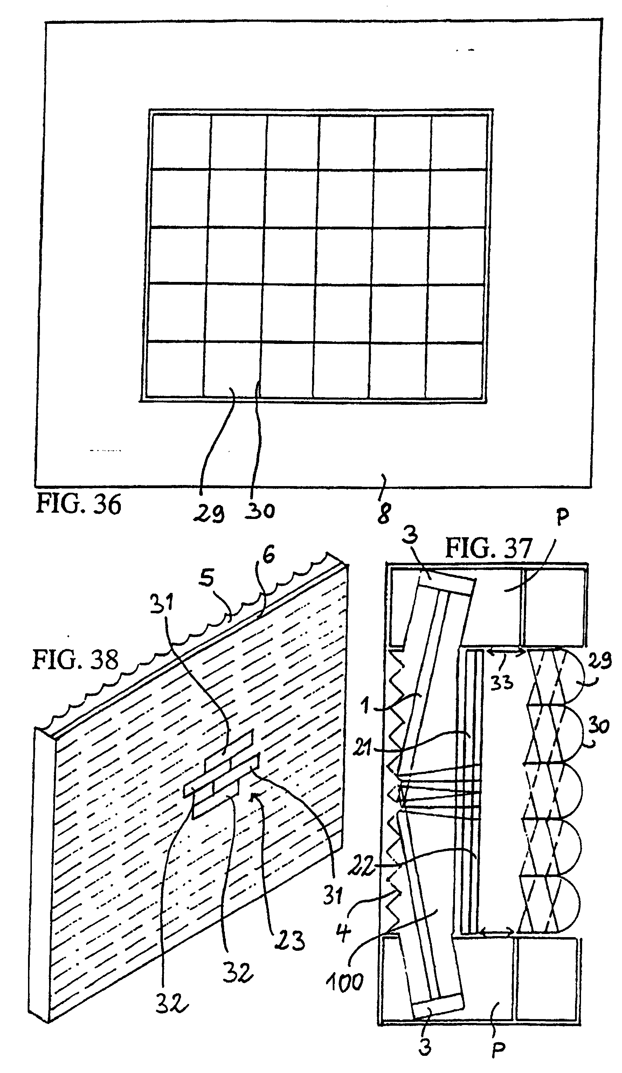

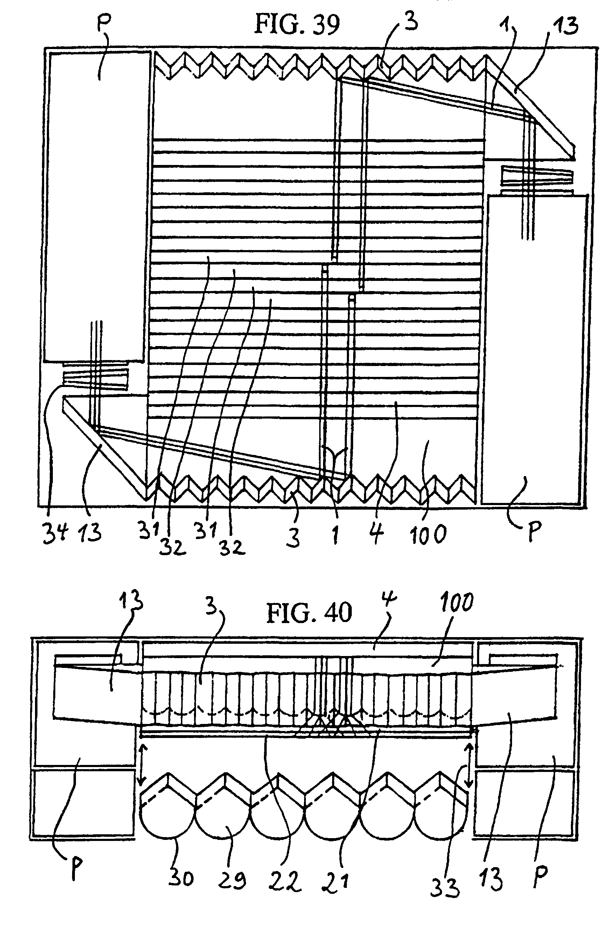

Das nächste alternetive Beispiel nach den Figuren 36 bis 46 ist insbesondere für die dreidimensionale Darstellung geeignet, die bisher besprochenen Beispiele sind aber gleichfalls für eine derartige Darstellung umrüstbar bzw. einsetzbar. Für die dreidimensionale Darstellung werden in diesem Fall zwei Projektoren eingesetzt, man erkennt dies beispielsweise aus Fig. 37, siehe Projektoren **P** oben und unten. Der Strahlengang ist beispielsweise aus Fig. 37 ersichtlich. Von den beiden Projektoren **P** fallen die Strahlenbündel zunächst auf einzelne Reihenspiegel **3**, dabei hat jeder Projektor einen eigenen Reihenspiegel. Von dort fallen sie auf Zeilenspiegel, diese sind von beiden Seiten nutzbar, sie sind klappsymmetrisch ausgebildet. Von den Reihenspiegeln, die im wesentlichen eine Aneinanderreihung gleichwinkliger Dreiecke sind, fallen die Strahlen auf eine Scheibe **21** mit Grobstreucharakter, siehe Grobstreulinsen **5** und danach auf eine Feinstreuanordnung **22,** siehe Feinstreulinsen **6**. Die Bildebene befindet sich auf der Frontseite der Feinstreuscheibe mit den Feinstreulinsen **6.** Dieses Bild wird nun über eine Anordnung aus rasterförmig zusammenhängenden Umlenkkörpern, 3D-Linsen **29, 30** genannt, betrachtet, die in Strahlrichtung vom Prismencharakter haben, während sie in Strahlenrichtung hinten Linsencharakter haben. Diese Anordnung der kleinen optischen Körper **29, 30** entspricht dem Lochraster einer Fernsehdarstellung.

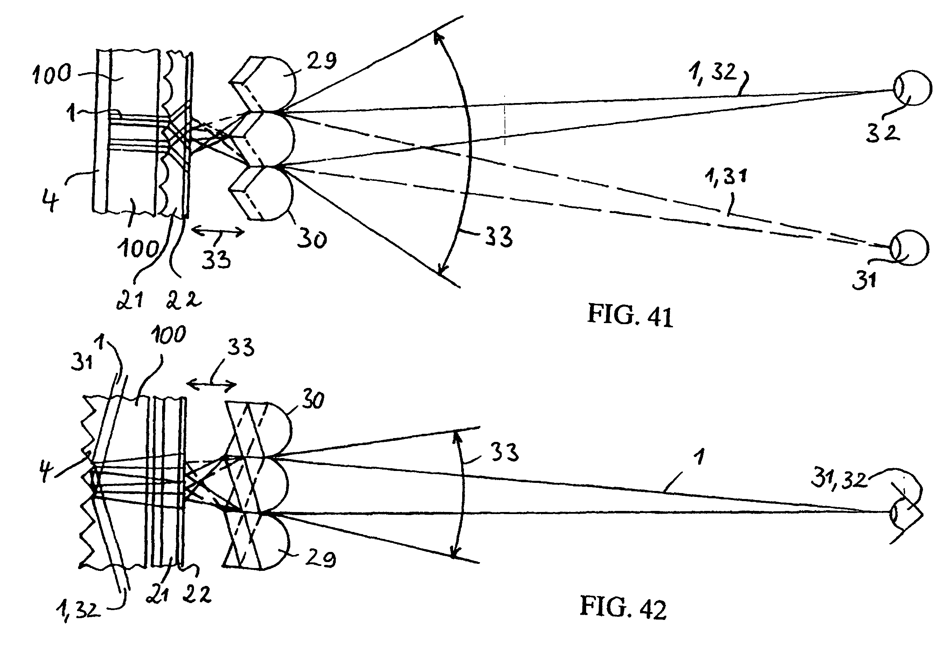

Im folgenden wird das Prinzip dieser dreidimensionalen Darstellung beschrieben: Wie aus Fig. 38 ersichtlich ist, befindet sich auf der Außenfläche der Scheibe mit den Feinstreulinsen **6** das Bild in Form eines Bildpunktes **23.** Dargestellt sind vier einzelne, längliche Vierecke, die alternierend von den beiden Projektoren stammen. Das obere Teilpixel **31** ist für das linke Auge, eine Hälfte, das darunter befindliche Teilpixel **32** ist für das rechte Auge, eine Hälfte, darunter wiederum befindet sich das dritte Teilpixel für das linke Auge, zweite Hälfte und schließlich ganz darunter zweite Hälfte des rechten Teilpixels **32.** Aus den Figuren 41 bis 43 wird klar, wie ein Betrachter ein dreidimensionales Bild sieht. Die 3D-Linse **29, 30** bildet jedes Einzelpixel in die Bildebene eines Auges **31, 32** ab. Die beiden schräg versetzten Prismen der 3D-Linse **29** teilen die Strahlen der Pixel auf und lenken sie einmal in das eine, einmal in das andere Auge. Das oberste Teilpixel kommt immer zum linken Auge **31,** das darunterliegende Teilpixel bildet sich im rechten Auge **32** ab usw.. Auf diese Weise ist durch die prismatische Funktion der 3D-Linsen **29** die Aufteilung in linkes Auge rechtes Auge gewährleistet.

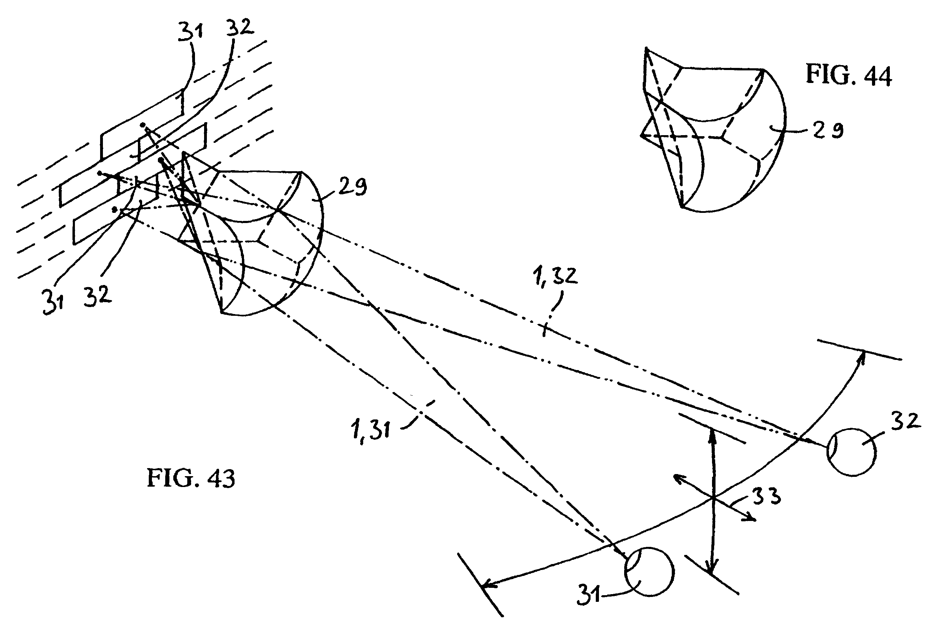

Es können mehrere Personen nebeneinander sitzen und auf das gleiche Pixel **23** schauen. Der Bereich wird durch die Pfeile, die in Fig. 43 in der Bildebene (Ebene der Augen) dargestellt sind, aufgespannt. Es handelt sich um einen ferrischen Rechteckbereich, sprich in dem Öffnungswinkel in horizontaler und vertikaler Richtung. Der Abstand zwischen den 3D-Linsen **29** und der Streuscheibe **22** kann variiert werden, um die Abbildung in der Ebene der Augen **31, 32** zu erreichen, siehe Pfeile **33**.

Ein weiteres, entscheidendes Merkmal dieser Vorrichtung wird nun unter Bezugnahme auf die Figuren 41 und 42 erläutert. Um einen möglichst großen Öffnungswinkel zu erhalten, sind die optischen Reihensignale, die den entsprechenden Pixeln zugeordnet sind und die normalerweise senkrecht hintereinander angeordnet sind, nunmehr waagerecht nebeneinander ausgerichtet. Die Zeilen sind entsprechend senkrecht. Dies ist durch die Umlenkung, wie sie schon beschrieben wurde und insbesondere aus Fig. 37 ersichtlich ist, erreicht. Die Figuren 41 und 42 zeigen, daß der Öffnungswinkel im Bereich der Waagerechten deutlich größer ist als der Öffnungswinkel im Bereich der Senkrechten. Der Unterschied liegt etwa bei 1 zu 4 bis 1 zu 2.

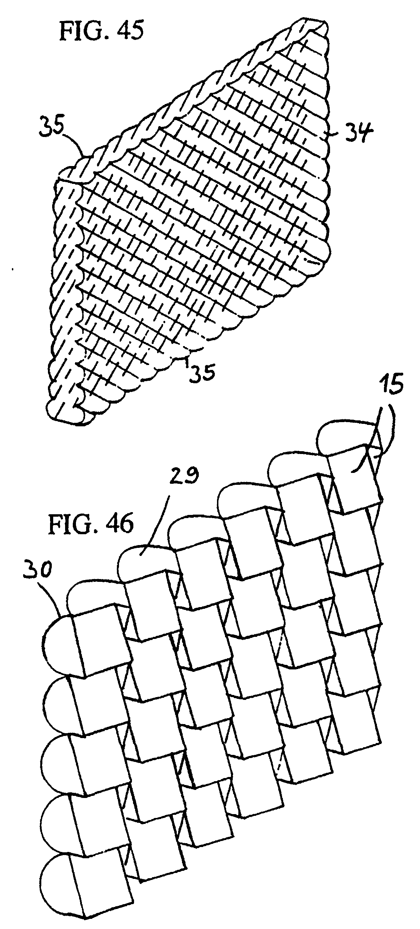

Aus Fig. 45 ist eine flache Ausgleichsscheibe ersichtlich, die die unterschiedliche Länge einzelner Pixelstrahlengänge ausgleicht. Sie wird in der Vorrichtung der soeben besprochenen Ausführung zwischen Projektor und erster Lichtumlenkung eingefügt. Sie besteht aus diagonal-kreuzweise angeordneten Rillenlinsen. Wobei die unterschiedlichen Rillen unterschiedliche Brennweiten haben.

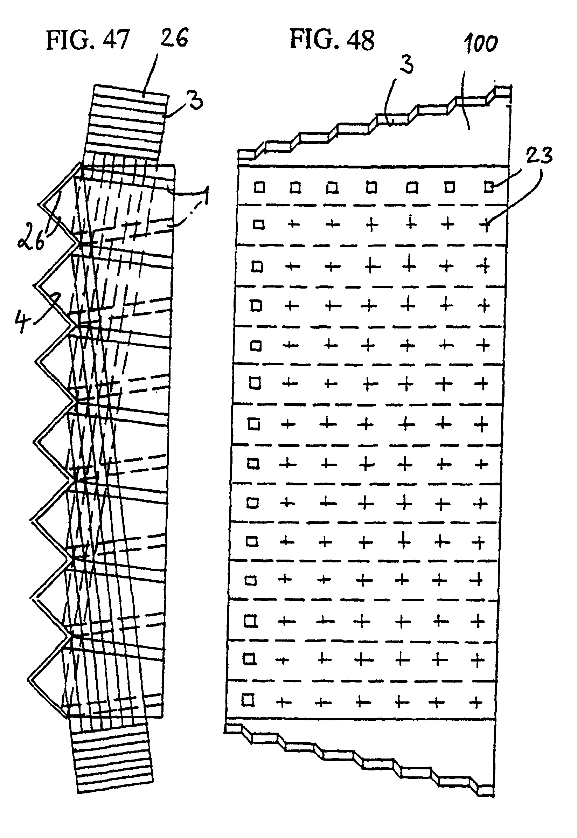

Fig. 46 zeigt eine flache zweidimensionale Anordnung der 3D-Linsen **29** in Form einer Scheibe, gesehen von hinten. In dieser Form werden die Linsen zusammengefaßt und bilden eine rastergerechte Anordnung analog einer Lochscheibe in einem Fernsehbildschirm. Die Linsen **29** sind zwar mechanisch miteinander verbunden, können aber seitlich nicht Licht austauschen, die Berührungsflächen sind lichtundurchlässig. beispielsweise geschwärzt.

Die Figuren 47 und 48 zeigen das Prinzip der hier verwendeten optischen Darstellung. Die Lichtstrahlen der beiden Laser kommen in Fig. 48 von rechts und treffen auf die Innenflächen, die verspiegelt sind, der Reihenspiegel **3.** Von dort gelangen sie auf die Zeilenspiegel, einmal die linke Seite, einmal die rechte Seite. Dies ist insbesondere aus Fig. 47 ersichtlich. Sie gelangen dann in Fig. 47 rechts auf die Oberfläche, die hier nicht speziell ausgeführt ist, dort können die normalen Scheiben **5, 6** vorgesehen sein. Fig. 48 zeigt die einzelnen Bildpunkte, einmal als Quadrat, einmal als Kreuz, der Unterschied spielt keine Rolle.

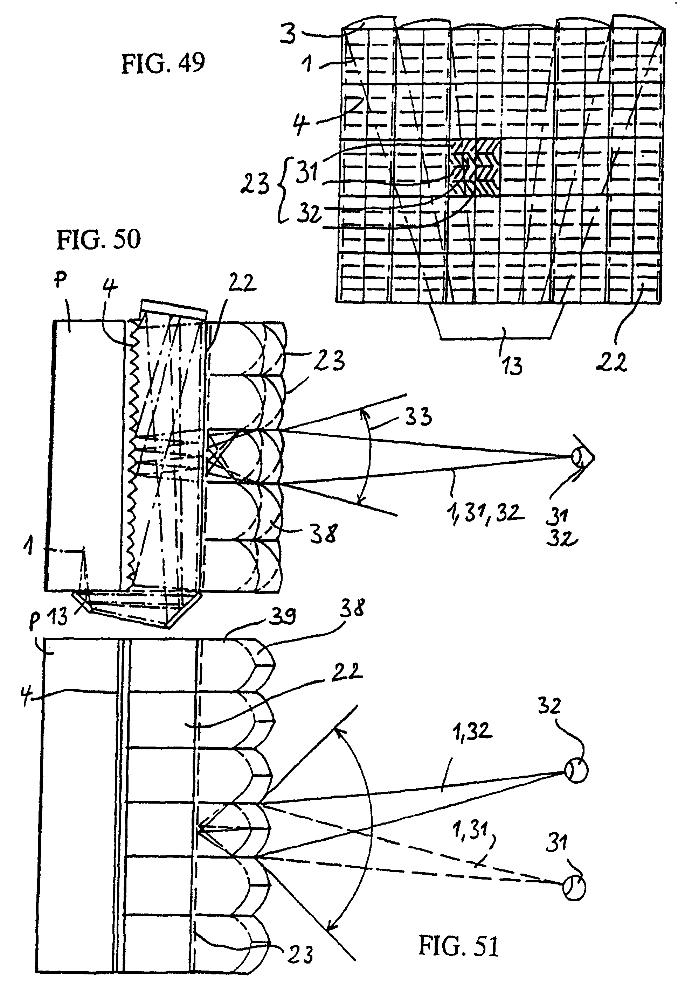

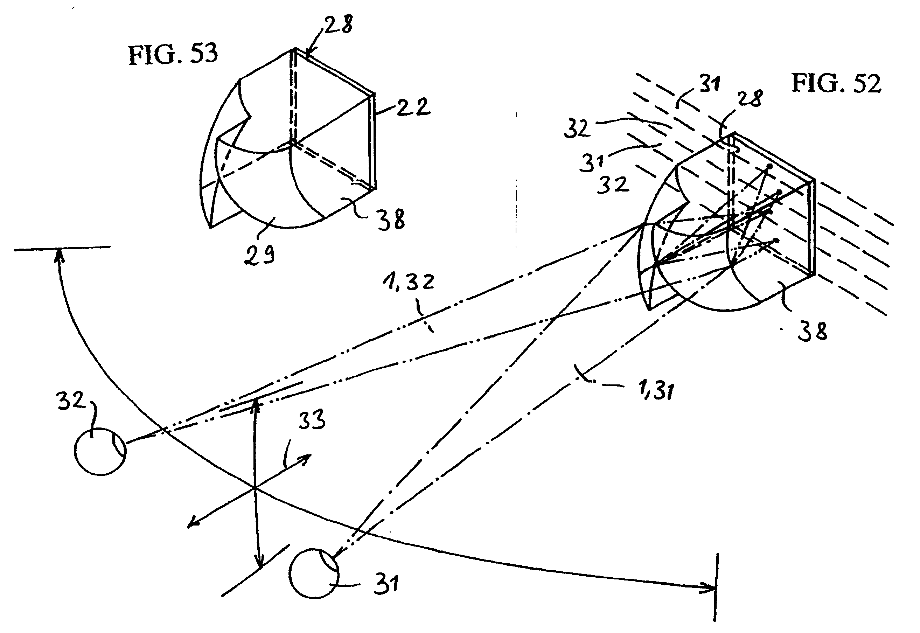

Im folgenden wird das alternative Beispiel nach den Figuren 49 bis 51 beschrieben: Es ist eine Alternative zu dem bereits besprochenen Beispiel für dreidimensionale Darstellung nach den Figuren 36 bis 46. Nunmehr sind die 3D-Linsen **29** unmittelbar auf die Streuscheibe **22** aufgebracht. Um dies erreichen zu können, sind nun bei den 3D-Linsen **29** die prismatischen Teile und die Linsenteile zusammengefaßt, sie befinden sich auf der der Streuscheibe **22** abgewandten Seite des 3D-Körpers **29.** Es werden zwei Bereiche unterschiedlicher Krümmung ausgebildet, die nebeneinander angeordnet sind, sie sind gegeneinander versetzt. Es wird wieder ein Strahlengang erreicht, siehe Fig. 52, wie er ähnlich auch in der Fig. 43 erreicht ist. Nur sind diesmal die Teilpixel enger nebeneinander. Die Aufspaltung der Lichtwege erfolgt wieder durch die unterschiedliche prismatische Ausführung, die Fokussierung erfolgt wieder durch die Linsenfunktion der 3D-Linse **29**. Letztere sind auch wiederum rasterförmig angeordnet. Die Ausführung hat dabei den Vorteil, daß die 3D-Linsen einfacher herzustellen sind, sie können direkt auf die Streuscheibe **22** aufgebracht werden. Wiederum ist ersichtlich, daß der horizontale Öffnungswinkel deutlich größer ist als der vertikale Öffnungswinkel, siehe Figuren 50, 51. In diesem Fall ist der horizontale Öffnungswinkel sogar noch größer, weil man im selben optischen Medium bleibt und keine Luftzwischenschicht hat.

Der Strahlengang wird nun anhand von Fig. 50 erläutert. Von einem hier nicht dargestellten Laserprojektor fällt das Licht auf einen ersten Umlenkspiegel **13,** von dort auf einen zweiten Umlenkspiegel **13,** von dem es in Fig. 50 nach oben verläuft und auf einen Reihenspiegel **3** gelangt. Dieser ist auch in Fig. 49 sichtbar. Von dort kommt er auf die Zeilenspiegel. Im Unterschied zu dem vorangegangenen Beispiel ist hier nur ein Projektor vorgesehen. Das Signal jedes einzelnen Pixels wird bereits elektronisch aufgespalten in vier Einzelpixelsignale für das linke und rechte Auge **31, 32.** Auf diese Weise wird nur ein Projektor **P** benötigt. Auch hier erfolgt eine Vertauschung von Reihen und Zeilen, dies wird allerdings elektronisch durchgeführt. Die unterschiedliche Aufweitung, wie sie bereits beschrieben wurde, wird auf diese Weise erreicht.

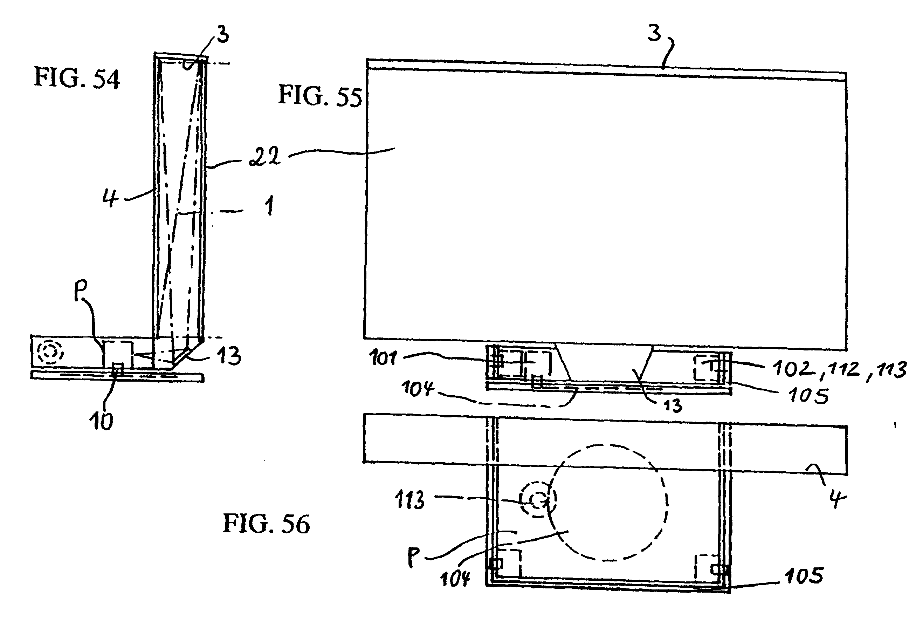

Die Figuren 54 bis 56 zeigen nun einen speziellen Projektor für die Vorrichtung nach den Figuren 49 bis 51. Es wird nur ein Umlenkspiegel eingesetzt, der Projektor **P** strahlt waagerecht nach vorn, sein Licht wird mittels des Spiegels **13** nach oben geworfen. Es erreicht dann den Reihenspiegel **3**, der weitere Strahlengang wie zuvor.

Der Projektor **P** ist tastaturgesteuert dreh- und kippbar, die Steuerung ist dabei beliebig, sie kann auch mittels einer Maus oder dergleichen erfolgen.

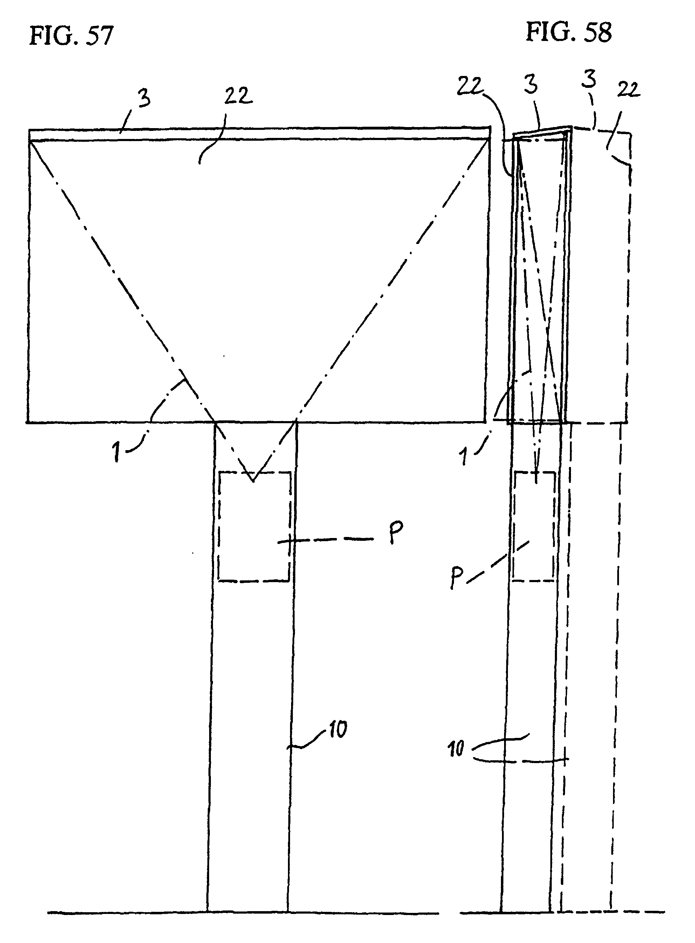

Im Unterschied zu dem vorangegangenen Beispiel zeigt das beispiel nach den Figuren 57 und 58 eine Projektionsvorrichtung **P**, bei der der Umlenkspiegel **13** entfällt. Der Projektor befindet sich nun unterhalb der Vorrichtung, er beleuchtet unmittelbar die Reihenspiegel **3**. Um dies zu erreichen, ist der Projektor **P** elektronisch wie folgt betrieben: Das Ausgangsbild des Projektors ist relativ schmal und lang. In der Reihenebene ist es so schmal wie die Breite der Reihenspiegel **3**, in der Zeilenrichtung hat es aber in der Ebene des Reihenspiegels 3 die komplette Breite des endgültigen Bildes. Aufgrund dieser besonderen elektronischen Auffächerung ist der Laserstrahl jedes einzelnen Pixels sind die Strahlen divergent. Dies wird kompensiert dadurch, daß die Reihenspiegel als sammelnde Spiegel ausgebildet sind.

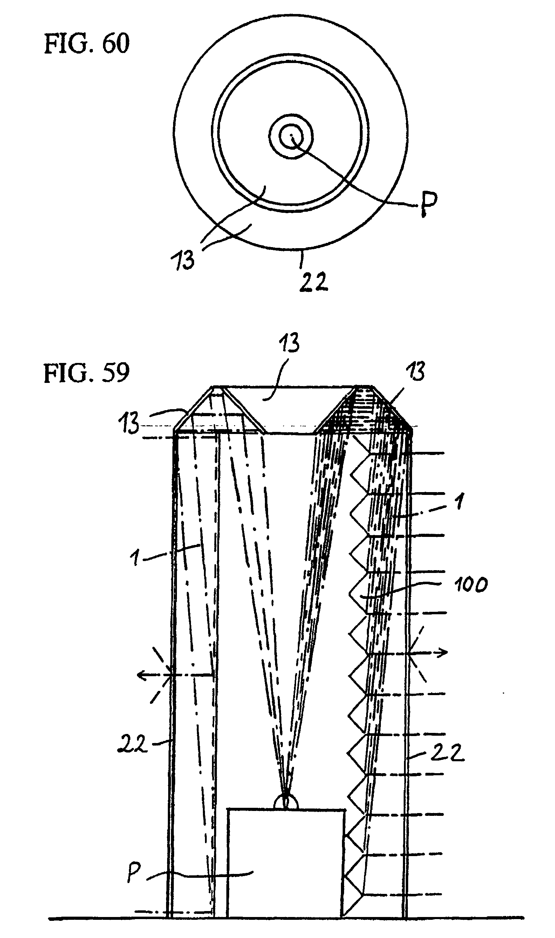

Abschließend wird nun das alternative Beispiel nach den Figuren 59 und 60 beschrieben. Dieses beispiel ist ähnlich der Ausbildung gemäß den Figuren 49 bis 51, lediglich die Rundumanordnung ist nun hinzugebracht. Dies wird dadurch erreicht, daß das optische Ausgangssignal des Projektors **P** speziell aufbereitet wird. Bei diesem Ausgangssignal verlaufen die einzelnen Zeilensignale auf konzentrischen Kreisen, während die Reihensignale auf Radialen verlaufen. In einer Anordnung ähnlich Fig. 15 mit entsprechender Strahlenführung wird dann auf einer Außenfläche eines Zylinders, der hier den Bildschirm (Streuscheibe **22**) bildet, das Bild erzeugt.

## Patentansprüche

1. Flachbildschirm-Projektionsvorrichtung zur Projektion von Zeilen und Reihen von Pixeln, derart daß hinter einem Bildschirm (**7**) und parallel zu diesem in die Flachbildschirm-Projektionsvorrichtung eintretende Lichtstrahlen (**1**) zunächst auf einen mit einer vielzahl von versetzten Flächen versehenen Reihenspiegel (**2**) auftreffen, von diesem in eine Reflexionsvorrichtung (**3**) gelenkt werden, die die Lichtstrahlen **(1)** um eine bestimmte Länge in Richtung zum Bildschirm (**7**) versetzt und diese dann reihenparallel zum Bildschirm (**7**) hin zu einen weiteren mit einer vielzahl von versetzten flächen versehenen Zeilenspiegel (**4**) umlenkt, von dem die Lichtstrahlen **(1)** dann von hinten senkrecht auf den Bildschirm (**7**) treffend umgelenkt werden.

2. Flachbildschirm-Projektionsvorrichtung nach Anspruch 1, wobei die Reflexionsvorrichtung als Prismenanordnung (**3**) ausgebildet ist.

3. Flachbildschirm-Projektionsvorrichtung nach Anspruch 1, wobei die Reflexionsvorrichtung als Dachkantenspiegel ausgebildet ist.

4. Flachbildschirm-Projektionsvorrichtung nach Anspruch 1 - 3, wobei die Lichtstrahlen **(1)** auf ihrer letzten Bahn von demZeilenspiegel **(4)** auf den Bildschirm **(7)** durch Streulinsen **(5, 6),** vorzugsweise Fresnellinsen hindurchgelenkt werden, bevor sie auf den Bildschirm **(7)** von hinten auftreffen.

5. Flachbildschirm-Projektionsvorrichtung nach Anspruch 4, wobei die Lichtstrahlen **(1)** zunächst jeweils durch eine gröbere Fresnellinse **(5)** zur Grobstreuung und dann zur Feinstreuung durch feinere Frensellinsen **(6)** gelenkt werden, bevor sie auf den Bildschirm **(7)** von hinten auftreffen.

6. Flachbildschirm-Projektionsvorrichtung, wobei die Vorrichtung aus einer vertikalen und/oder horizontalen Aneinanderreihung von einzelnen Flachbildschirm-Projektionsvorrichtungen (**8**), je nach einem der Ansprüche 1 bis 5 besteht.

7. Flachbildschirm-Projektionsvorrichtung nach Anspruch 1 bis 5, wobei die Lichtstrahlen (**1**), bevor sie auf den Reihenspiegel (**2**) treffen entsprechend einem Farbbildsignal, vorzugsweise einem Videosignal in die Flachbildschirm-Projektionsvorrichtung (**8**) eingekoppelt werden.

8. Flachbildschirm-Projektionsvorrichtung nach Anspruch 7, wobei die Einkopplung der einzelnen farbigen Lichtstrahlen mittels Mikrohubspiegeln (**16**) geschieht, die von einer elektronischen Steuerung **(11)** entsprechend dem Farbbildsignal angesteuert werden, wobei die Mikrohubspiegel (**16**) mit verschiedenfarbigen Lichtstrahlen für ihre verschiedenen Hubpositionen versorgt werden und je nach Hubposition einen andersfarbigen Lichtstrahl reflektieren und damit in die Flachbildschirm-Projektionsvorrichtung **(8)** einkoppeln.

9. Flachbildschirm-Projektionsvorrichtung nach Anspruch 8, wobei die Mikrohubspiegel **(16)** in Flachbauweise ausgeführt sind, und zwar derart, daß elektrische Spulen **(19)** um den jeweiligen Spiegel **(16)** auf einem Flachbauträger herum angelegt sind, so daß sich der auf dem Flachbauträger angeordnete Spiegel **(16)** bei Erregung unterschiedlicher Spulen (**19**) unterschiedlich wölbt, so daß er seine Reflexionsebene entsprechend der Erregung der Spulen (**19**) verändert.

10. Flachbildschirm- Projektionsvorrichtung, wobei die Vorrichtung aus einer vertikalen und/oder horizontalen Aneinanderreihung von Flachbildschirm-Projektionsvorrichtungen (**8**) nach einem der Ansprüche 7 bis 9 besteht.

## Claims

1. Flat display screen projection device for projecting lines and rows of pixels in a way that, behind a display screen (7) and parallel to it, light rays (1) entering the flat display screen projection device first impinge on a row mirror (2) having a plurality of staggered planes, are directed thereby into a reflection device (3) that displaces the light rays (1) by a certain length in the direction towards the display screen (7) and redirects them in row-parallel arrangement to the display screen (7) towards a further line mirror (4) having a plurality of staggered planes, said line mirror deviating the light rays (1) so that they impinge in a right angle from behind on the display screen (7).

2. Flat display screen projection device according to claim 1, wherein the reflecting device is designed as a prism configuration (3).

3. Flat display screen projection device according to claim 1, wherein the reflecting device is designed as ridge mirrors.

4. Flat display screen projection device according to claims 1-3, wherein on their last trajectory from the line mirror (4) towards the display screen (7), the light rays (1) are directed through divergent lenses (5, 6), preferably Fresnel lenses, before they impinge from behind on the display screen (7).

5. Flat display screen projection device according to claim 4, wherein the light rays (1) are first directed one by one through a coarse Fresnel lens (5) for a coarse dispersion and then through finer Fresnel lenses (6) for a fine dispersion before they impinge from behind on the display screen (7).

6. Flat display screen projection device, wherein the device comprises a vertical and/or horizontal lining-up of individual flat display screen projection devices (8), each according to one of the claims 1 to 5.

7. Flat display screen projection device according to claim 1 to 5, wherein the light rays (1) are fed according to a colour picture signal, preferably a video signal, into the flat display screen projection device (8) before they are impinging on the row mirror (2).

8. Flat display screen projection device according to claim 7, wherein this feeding of the individual coloured light rays is occurring by means of microstroke mirrors (16) which are triggered by an electronic control (11) according to the colour picture signal, whereas the microstroke mirrors (16) are provided with light rays of different colours for their different stroke positions and are reflecting, according to their stroke position, a light ray of another colour which they feed thus into the flat display screen projection device (8).

9. Flat display screen projection device according to claim 8, wherein the micostroke mirrors (16) are designed in surface mounting technology so that electrical coils (19) are accomodated around the corresponding mirror (16) on a surface mounting support so that the mirror (16) accomodated on the surface mounting support is deflecting in different ways when excited by different spools (19) so that its reflection level is changing according to the excitation of the spools (19).

10. Flat display screen projection device, wherein the device is constituted by a vertical and/or horizontal alignment of flat display screen projection devices (8) according to the claims 7 to 9.

## Revendications

1. Dispositif de projection à écran plat pour la projection de lignes et de rangées de pixels, de telle manière que des rayons lumineux (1) entrant derrière un écran (7) et parallèlement à celui-ci dans le dispositif de projection à écran plat rencontrent d'abord un miroir en rangée (2) pourvu d'une multitude de surfaces décalées, sont dirigés par ledit miroir dans un dispositif de réflexion (3) qui déplace les rayons lumineux (1) d'une certaine longueur vers l'écran (7) et qui les dirige ensuite parallèlement à l'écran (7) vers un autre miroir en ligne (4) pourvu d'une multitude de surfaces décalées, ledit miroir en ligne dirigeant ensuite les rayons lumineux (1) de telle manière qu'ils rencontrent l'écran (7) verticalement de derrière.

2. Dispositif de projection à écran plat selon la revendication 1, dans lequel le dispositif de réflexion est réalisé comme disposition de prismes (3).

3. Dispositif de projection à écran plat selon la revendication 1, dans lequel le dispositif de réflexion est réalisé comme miroir triangulaire.

4. Dispositif de projection à écran plat selon la revendication 1 à 3, dans lequel les rayons lumineux (1), sur leur dernière trajectoire du miroir en ligne (4) vers l'écran (7), sont dirigés au travers de lentilles divergentes (5, 6), de préférence lentilles de Fresnel, avant qu'ils rencontrent l'écran (7) de derrière.

5. Dispositif de projection à écran plat selon la revendication 4, dans lequel les rayons lumineux (1) sont dirigés d'abord respectivement au travers d'une lentille de Fresnel plus grosse (5) pour la dispersion grossière et ensuite, pour la dispersion fine, au travers de lentilles de Fresnel plus fines (6), avant qu'ils rencontrent l'écran (7) de derrière.

6. Dispositif de projection à écran plat, le dispositif se composant de dispositifs individuels de projection à écran plat (8), respectivement selon l'une des revendications 1 à 5, alignés verticalement et/ou horizontalement.

7. Dispositif de projection à écran plat selon la revendication 1 à 5, dans lequel les rayons lumineux (1), avant qu'ils rencontrent le miroir en rangée (2), sont couplés suivant un signal d'image en couleur, de préférence un signal vidéo, au dispositif de projection à écran plat (8).

8. Dispositif de projection à écran plat selon la revendication 7, dans lequel le couplage des rayons lumineux individuels de couleur est effectué au moyen de miroirs miniaturisés exerçant une course (16) qui sont commandés par une commande électronique (11) suivant le signal d'image en couleur, lesdits miroirs miniaturisés exerçant une course (16) étant alimentés en rayons lumineux de couleur différente pour leurs positions différentes de course et reflétant, selon la position de course, un rayon lumineux de couleur différente qu'ils couplent ainsi au dispositif de projection à écran plat (8).

9. Dispositif de projection à écran plat selon la revendication 8, dans lequel les miroirs miniaturisés exerçant une course (16) sont réalisés en technologie de montage en surface, à savoir de telle manière que des bobines électriques (19) sont arrangées autour du miroir respectif (16) sur un support plat, de sorte que le miroir (16) disposé sur le support plat se voûte différemment lors de l'excitation de bobines différentes (19), de sorte qu'il change son plan de réflexion suivant l'excitation des bobines (19).

10. Dispositif de projection à écran plat, le dispositif se composant de dispositifs individuels de projection à écran plat (8) selon l'une des revendications 7 à 9, alignés verticalement et/ou horizontalement.
